# EUROPEAN PATENT SPECIFICATION

(11) **EP 3 314 884 B1**
(45) Date of publication and mention of the grant of the patent: **04.08.2021**
(21) Application number: 16750256.6
(22) Date of filing: 16.06.2016
(51) Int. Cl.: H04N 5/232, G06F 3/0484

(54) **PROVIDING ENHANCED SITUATIONAL-AWARENESS USING MAGNIFIED PICTURE-IN-PICTURE WITHIN A WIDE FIELD-OF-VIEW OPTICAL IMAGE**
BEREITSTELLUNG VON ERWEITERTEM SITUATIONSBEWUSSTSEIN MIT EINEM VERGRÖSSERTEN BILD-IM-BILD IN EINEM OPTISCHEN BILD MIT GROSSEM SICHTFELD
FOURNITURE D'UNE CONNAISSANCE AMÉLIORÉE DE LA SITUATION À L'AIDE D'UNE IMAGE DANS L'IMAGE AGRANDIE À L'INTÉRIEUR D'UNE IMAGE OPTIQUE À LARGE CHAMP DE VISION

(30) Priority: 26.06.2015 US 201514752241
(43) Date of publication of application: 02.05.2018
(73) Proprietor: Alsheuski, Aliaksandr, 03202 Vilneus (LT)
(72) Inventor: Alsheuski, Aliaksandr, 03202 Vilneus (LT)
(74) Representative: Fish & Richardson P.C.
(86) International application number: PCT/IB2016/000956
(87) International publication number: WO 2016/207718

(56) References cited:
- US-A1- 2012 320 193
- US-A1- 2015 135 125
- US-B1- 8 336 777

## Description

### CLAIM OF PRIORITY

This application claims priority to U.S. Patent Application No. 14/752,241 filed on April 26, 2015.

### BACKGROUND

Currently when using an optical device (e.g., a firearm scope, spotting scope, binocular, telescope, etc.) with a wide field-of-view (FOV) and a reticle (e.g., a crosshair, dot, etc.) for aiming, it can sometimes be extremely difficult to differentiate and/or engage a distant target. However, if the FOV is narrowed and the target is zoomed in on to provide greater target detail, situational awareness can be decreased or lost due to the narrowed FOV. A narrowed FOV can, for example, decrease or prevent an optical device operator from gathering data, fully assessing a tactical situation, and/or performing some desired task.

US 2012/0320193 A1 describes a surveying instrument comprising a telescope, at least one camera providing first, second or more image signals and a controller, wherein the controller is adapted to combine the image signal data of the first, second or more image signals in order to simultaneously display at least two of the images corresponding to the first, second or more image signals on display means.

US 8,336,777 B1 describes a weapon aiming system that projects an aim point and/or an image from a weapon mounted vision system into a display coupled to a head-mounted vision system to aid in acquiring a target. The system incorporates electronic image stabilization and is capable of maintaining a reticle aligned with a point-of-impact of a weapon.

### SUMMARY

The present disclosure describes providing enhanced situational awareness using magnified picture-in-picture (PIP) within a wide field-of-view (FOV) optical image.

Claim 1 provides a method for providing enhanced situational awareness using a magnified picture-in-picture within a wide field-of-view optical image from a firearm scope according to the present invention.

Other implementations of this aspect include corresponding computer-readable medium and firearm scope as set out in claims 9 and 10.

The foregoing and other implementations can each optionally include one or more of the following features, alone or in combination:

A first aspect, combinable with the general implementation, comprising receiving audio or other data associated with the optical image.

A second aspect, combinable with the general implementation, wherein the other data includes data received from temperature, altitude, humidity, atmospheric pressure, elevation, gyroscopic, accelerometer, light intensity, or compass sensors.

A third aspect, combinable with the general implementation, wherein processing includes formatting, sizing, scaling, color determination, temperature determination, contrast determination, and brightness determination.

A fourth aspect, combinable with the general implementation, wherein the magnified PIP optical image displays a lower pixel detailed image than the wide FOV optical image.

A fifth aspect, combinable with the general implementation, wherein the magnified PIP optical image displays a reticle reduced in size from a reticle displayed on the wide FOV optical image.

A seventh aspect, combinable with the general implementation, wherein the magnified PIP optical image is displayed centered and above the center point of the wide FOV optical image.

The subject matter described in this specification can be implemented in particular implementations so as to realize one or more of the following advantages. First, providing a magnified PIP within a wide FOV optical image can enhance situational awareness for a viewer of the optical image using an optical device. Enhanced situational awareness can improve safety for the optical device user (e.g., law enforcement, military, security, etc.) or help improve the efficacy of the viewing/recording of a particular optical image (e.g., research, documentation, surveillance, etc.). Second, the magnified PIP image can allow an optical device user to quickly focus the optical device to draw attention to definite features of a particular wide FOV optical image (e.g., an animal, building, surveillance target, etc.). For example, this can enhance usability, e.g., where there are many features present in an optical image (e.g., a city or jungle type environment) or ambient light is naturally fading (e.g., at dusk/sunset). This increase in reaction time can result in proper and effective target engagement and enhance overall safety for the optical device user. Third, the described functionality can provide greater detail, confidence, and confirmation of the identity of a target when viewing a wide FOV optical image with an optical device. For example, a reticle associated with a wide FOV optical image can be used to indicate a particular target on the wide FOV optical image while the magnified PIP can be used to provide additional detail related to the target (e.g., animal type, facial features, license plate number, number of individuals, etc.). As a particular example, a hunter can confirm that an object seen in the wide FOV image is actually an animal being hunted as opposed to a camouflaged human hunter. Other advantages will be apparent to those of ordinary skill in the art.

The details of one or more implementations of the subject matter of this specification are set forth in the accompanying drawings and the description below. Other features, aspects, and advantages of the subject matter will become apparent from the description, the drawings, and the claims.

### DESCRIPTION OF DRAWINGS

FIG. 1 is a screenshot of enhanced situational awareness using magnified picture-in-picture (PIP) within a wide field-of-view (FOV) optical image, according to an implementation.
FIG. 2 is a block diagram of a system for providing enhanced situational awareness using magnified PIP within a wide FOV optical image, according to an implementation.
FIG. 3 is a block diagram of an exemplary computer used in the provision of enhanced situational awareness using magnified PIP within a wide FOV optical image, according to an implementation.
FIG. 4 is a flow chart of a method for providing enhanced situational awareness using magnified PIP within a wide FOV optical image, according to an implementation.

Like reference numbers and designations in the various drawings indicate like elements.

### DETAILED DESCRIPTION

The following detailed description is presented to enable any person skilled in the art to make, use, and/or practice the disclosed subject matter and is provided in the context of one or more particular implementations. Various modifications to the disclosed implementations will be readily apparent to those skilled in the art, and the general principles defined herein may be applied to other implementations and applications without departing from the scope of the disclosure. Thus, the present disclosure is not intended to be limited to the described and/or illustrated implementations but is to be accorded the widest scope consistent with the principles and features disclosed herein.

Currently when using an optical device (e.g., a firearm scope, spotting scope, binocular, telescope, etc.) with a wide field-of-view (FOV) and a reticle (e.g., a crosshair, dot, etc.) for aiming, it can sometimes be extremely difficult to differentiate and/or engage a distant target. However, if the FOV is narrowed and the target is zoomed in on to provide greater target detail, situational awareness can be decreased or lost due to the narrowed FOV. A narrowed FOV can, for example, decrease or prevent an optical device operator from gathering data, fully assessing a tactical situation, and/or performing some desired task.

At a high level, what is described is a system and method for providing enhanced situational awareness using magnified picture-in-picture (PIP) within a wide FOV optical image from an optical device. While a specific illustration of a particular optical device providing the described functionality is not provided, those of ordinary skill in the art will appreciate that the described system, method, and/or functionality can be applied to optical devices including, but not limited to, firearm scopes, spotting scopes, telescopes, binoculars, monocular, digital cameras, and other optical devices. In some implementations, a specific "add-on"/external system implementation can be used in conjunction with an existing optical device (with appropriate adaptors as understood by those of ordinary skill in the art) to provide the described enhanced situational awareness using magnified PIP within a wide FOV optical image from the optical device. In other implementations, the described system, method, and/or functionality can be integrated directly into the hardware/software of an optical device.

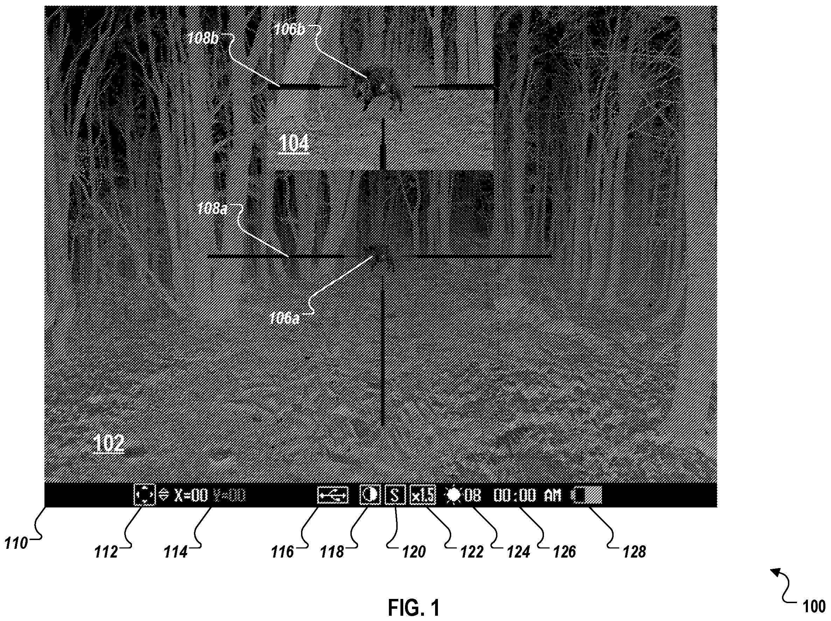

FIG. 1 is a screenshot 100 of enhanced situational awareness using magnified PIP within a wide FOV optical image, according to an implementation. As will be appreciated by those of ordinary skill in the art, the illustrated screenshot 100 is for illustration and example only and is not meant to limit the application in any way.

The screenshot 100 shows a wide FOV optical image 102 and a magnified PIP 104 of a thermal image of a woodland-type scene with a target (e.g., animal) 106a and 106b, respectively, at the center of the wide FOV optical image 102 and magnified PIP 104. While the magnified PIP 104 is illustrated centered above the midpoint of the wide FOV optical image 102, the magnified PIP 104 can be positioned/displayed in any position on the wide FOV optical image 102. For example, the magnified PIP 104 could be positioned in one of the corners of the wide FOV optical image 102.

Both the wide FOV optical image 102 and the magnified PIP 104 have some type of aiming indicator (e.g., a reticle), 108a and 108b, respectively. In the illustrated screenshot 100, the reticle 108a/108b is a similar "T"-shaped crosshair with an additional "red dot"-type center point. The "red dot"-type center point is used in the illustrated screenshot 100 to provide a fine aiming point on the target 106a in the wide FOV optical image 102 and an associated aiming point on the analogous target 106b displayed in a magnified state in the magnified PIP 104.

According to claim 1, a central area of a defined size (whether pre- or user-determined) of the wide FOV optical image 102 around the reticle 108a (whether displayed or not) is copied, processed, and projected as the magnified PIP 104. In typical implementations, the magnified PIP 104 displays a lower pixel detailed image providing an apparent increase in magnification. The magnified PIP 104 can also reflect a reduced size reticle 108b (analogous to reticle 108a) in a proper position onto the image displayed in the magnified PIP 104 for user reference and to provide situational awareness.

Note that in some implementations, the reticle 108a and 108b need not be similar. For example, the wide FOV 102 reticle 108a could be the represented "T"- shaped crosshair, while the magnified PIP 108b reticle could be an "X"-shaped aiming indicator, a simple "red dot"-type aiming indicator, some other type of aiming indicator, varying in color, etc. In some implementations, the wide FOV 102 and/or magnified PIP 104 can be displayed with the reticle turned OFF to provide an unobstructed view of the associated image. The functionality to turn reticles 108a and/or 108b ON/OFF can be, for example, provided by a user-accessible control (e.g., a multi-function switch, touch screen selection, external application on a mobile computing device, etc.) and/or some other method/control consistent with this application.

In some implementations, the magnification provided by the magnified PIP 104 can be selectable. For example, the magnified PIP 104 could provide a magnification (i.e., "zoom") range of 1-4X or some other magnification range. This selection could, in some implementations, be made by a user through a user-accessible control (e.g., a multi-function switch, touch screen selection, external application on a mobile computing device, etc.) and/or some other method/control consistent with this application. In some implementations, both the wide FOV optical image 102 and the magnified PIP 104 can be zoomed. In these implementations, changing the zoom of one can affect the zoom of the other. For example, if the wide FOV optical image 102 is at a 1.0X (actual size) and the magnified PIP 104 is as 2.5X, if the wide FOV optical image 102 is zoomed to 2.0X, the magnified PIP 104 zoom value may change to a higher value (e.g. 4.0X) according to some determined dynamic scale or a prior/on-the-fly user selection. The same can also occur if a zoom value is reduced for either the wide FOV optical image 102 or the magnified PIP 104.

Whether or not a reticle is displayed can be regulated by laws, regulations, etc. In some implementations, the wide FOV 102 and/or magnified PIP 104 can be devoid of a reticle or types of reticles in order to be in compliance with laws and/or regulations. In implementations with a reticle, reticle types/patterns can be preprogrammed and/or uploaded into a memory for use through a data, network, and/or other type of connection. Reticles can also be aligned ("zeroed") with a reticle on an optical scope or other optical device to allow for even greater versatility (e.g., using an adjustment method such as the above-described multi-function switch, touch screen, external application, etc.) to move the displayed reticle.

In some implementations, for example, infrared thermal applications, a thermal display frame rate for the wide FOV 102 and/or magnified 104 can also be restricted. For example, an 8Hz refresh rate may be exportable to different countries, but a 9Hz+ refresh rate may not. Note that the exportability, legality, etc. may also be influenced by the use of the above-mentioned reticle types in combination with varied refresh rates.

In some implementations, a data bar 110 can also be displayed with the wide FOV 102 and magnified PIP 104. For example, as illustrated with respect to screenshot 100, data bar 110 can contain different types of data associated with the wide FOV 102 and/or magnified PIP 104. As will be appreciated by those of ordinary skill in the art, the provided data types are for illustration and example only and are not meant to limit the application in any way.

Example data types on data bar 110 include a reticle moving direction indicator 112 and X/Y coordinate offset position indicators (for optical device "zeroing" purposes) 114, data connection indicator 116, contrast indicator 118, SUMLIGHT mode indicator 120, digital zoom indicator 122, brightness indicator 124, time/clock 126, and battery/power supply indicator 128. The data connection indicator 116 can, for example, indicate that a system implementing the described functionality is connected using a USB, FIREWIRE, serial, or other hardwired-type data connection or a WIFI, BLUETOOTH, or other wireless-type data connection. Contrast indicator 118 and brightness indicator 124 indicate display contrast/brightness selection data. The SUMLIGHT mode indicator 120 is used to show sensitivity of an image sensor (e.g., a charge coupled device (CCD)). The digital zoom indicator 122 indicates at what magnification level the magnified PIP 104 displays. For example, here the zoom value of the magnified PIP 104 is 1.5X. The time/clock 126 provides time values (and in some implementations, date values as well). The battery/power supply indicator 128 indicates available power to the system either using batteries or other power supply.

While the data bar 110 has been illustrated and described in relation to the wide FOV optical image 102, in some implementations, elements of the data bar 110 (and/or other data elements consistent with this disclosure) can be displayed with respect to the magnified PIP 104 (e.g., the digital zoom indicator can be displayed within the magnified PIP 104 rather than as illustrated in FIG. 1).

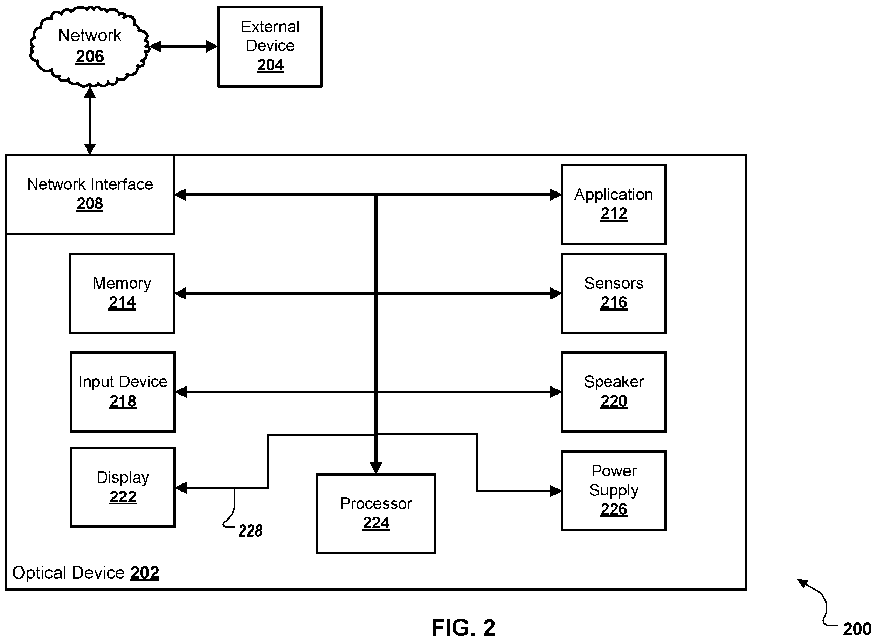

FIG. 2 is a block diagram of a system 200 for providing enhanced situational awareness using magnified PIP within a wide FOV optical image, according to an implementation. In typical implementations, system 200 includes an optical device 202 and optional external device 204 coupled together by a network 206. Note that the described optical device 202 is an optical device 202 with the described functionality integrated into the optical device 202.

In some implementations, optical device 202 includes a network interface 208, external connector 210 (not illustrated), application 212, memory 214, sensors 216, input device 218, speaker 220, display 222, processor 224, and power supply 226 communicating across a system bus 228. Note that while the system 200 is illustrated in a particular example configuration in FIG. 2, the functionality described in this disclosure is not limited by the illustrated implementation. As will be apparent to those of ordinary skill in the art, there are many possible configurations of system 200 consistent with this disclosure and both the above and following descriptions. Other configurations consistent with this disclosure are considered to be within the scope of this disclosure. For example, in other implementations, the system 200 can contain more or fewer components and/or the communicative coupling can be provided by more than one system bus 228.

Although illustrated as a single network interface 208 in FIG. 2, two or more network interfaces 208 may be used according to particular needs, desires, or particular implementations of the optical device 202/system 200. The network interface 208 is used by the optical device 202 for communicating with other systems (whether illustrated or not) in a distributed environment - including within the system 200 - connected to the network 206. Generally, the network interface 208 comprises logic encoded in software and/or hardware in a suitable combination and operable to communicate with the network 206. More specifically, the network interface 208 may comprise software supporting one or more communication protocols associated with communications such that the network 206 or interface's hardware is operable to communicate physical signals within and outside of the illustrated optical device 202/system 200.

External connector 210 represents and can be configured as one or more of a removable memory (e.g., flash memory, etc.) interface to allow the use of removable memory (not illustrated), a power supply connector, data transfer interface (e.g., a USB, FIREWIRE, ETHERNET, RCA, 3.5mm audio, HDMI, or component), and/or other types of external connectors 210 consistent with this disclosure. Two or more external connectors 210 may be used according to particular needs, desires, or particular implementations of the optical device 202 and/or system 200.

Application 212 is an algorithmic software engine providing functionality according to particular needs, desires, or particular implementations of the optical device 202 and/or performing any required functionality associated with the system 200 and within the scope of this disclosure. For example, application 212 can provide functionality for one or more elements of the optical device 202 described with respect to FIG. 2. An example of this functionality can include gathering an optical image using a visual sensor, processing the optical image, and displaying the optical image as a wide FOV optical image (e.g., wide FOV optical image 102 in FIG. 1) and portion of the optical image in a magnified PIP (e.g., magnified PIP 104 in FIG. 1).

The application 212 can, in some implementations, perform functions for processing received optical images and other data. For example, application 212 can take a received optical image, process the optical image (e.g., format, size, scale, color, contrast, brightness, thermal to visual, etc.), process other received data (e.g., adding audio data to the received optical image or processing other received sensor 216 data - such as elevation or temperature data), select/manage instructions for a particular visual representation of data to be displayed (e.g., optical image color and/or temperature such as black hot/white hot, temperature gradations, etc., pixel size, etc.), correlate/align the wide FOV optical image 102 with a magnified PIP 104, and other functions consistent with this disclosure.

In some implementations, application 212 can also provide optical device 202 functionality for two-way communication between the optical device 202 and an external device 204 (e.g., a mobile computing device executing an associated application, a data storage device, and the like). Further, although illustrated as a single application 212, the application 212 may be implemented as multiple applications 212 on the optical device 202. In addition, although illustrated as integral to the optical device 202, in alternative implementations, the application 212 can be external to the optical device 202 and/or the system 200.

Memory 214 holds data for the optical device 202 and/or the one or more elements of the system 200 and represents both internal- and external (removable)-type memory used with the optical device 202 and consistent with this disclosure. For example, internal-type memory can include one or more of flash, LPDDR2, and the like. External (removable)-type memory can include, for example, USB-type memory, CF cards, SD cards, and the like. Although illustrated as a single memory 214 in FIG. 2, two or more memories 214 may be used according to particular needs, desires, or particular implementations of the optical device 202 and/or system 200.

Sensors 216 can include one or more of visual, audio, temperature, altitude, humidity, atmospheric pressure, elevation, gyroscopic, accelerometer, light intensity, compass, and/or other sensors consistent with this disclosure. In some implementations, one or more of the sensors 216 can include metadata (e.g., time, date, geographic location, time span, security data, observer identification, subject identification, and the like) with gathered applicable data. In alternative implementations, one or more sensors 216 can be external to the optical device 202 (e.g., an externally attached camera, microphone, etc.).

A visual sensor (not independently illustrated) typically includes one or more of still/motion daylight, IR, ultraviolet (UV), or other spectrum cameras. In typical implementations, the visual sensor is designed to collect visible/non-visible light to allow processing, for example, by the application 212 and processor 224 for display on the display 222. For example, in some implementations, the visual sensor can be a LEPTON brand thermal imager visual sensor such as that produced by FLIR, Inc. (or equivalent type of visual sensor) and/or a daylight high-definition (HD) imager. In some implementations, both an IR thermal image and an HD daylight image can be merged to produce a more useful low-light image for an observer and for image recognition and/or analysis (e.g., by the application 212).

In some implementations, an objective lens (not illustrated) or window can be used to cover, protect, and/or enhance the functionality of the visual sensor. For example, the objective lens can be interchangeable (e.g., for a wider FOV, higher needed magnification, type of visual data desired, etc.). In some implementations, the objective lens can be configured of a material transparent to infrared (IR) radiation such as in thermal imaging systems. In some implementations, the objective lens can be configured of Germanium (Ge), quartz, AMTIER, barium fluoride, calcium fluoride, sodium chloride, CLEARTRAN, fused silica, silicon, polyethylene, IR transparent ceramics, and/or any other type of substance transparent to infrared electromagnetic radiation. In some implementations, the objective lens can be made of a substance transparent to both optical and IR radiation wavelengths (e.g., quartz, polyethylene, etc.). In some implementations, the objective lens and visual sensor can be removed and replaced with respect to the optical device 202 to change overall functionality without needing a separate and differently configured optical device 202. In some implementations, the visual sensor can be zoomed (optically and/or digitally) to magnify a received optical image for display on the display 222 (e.g., wide FOV optical image 102 and/or magnified PIP 104).

In some implementations, audio (e.g., gathered from one or more audio sensors (e.g., a microphone - not independently illustrated)) can be added to images gathered and recorded using the visual sensor. The audio can provide additional useful data when coupled with recorded visual images.

Input device 218 can include a built-in keyboard, keypad, touch-sensitive display, verbal command recognition (e.g., using the a microphone and/or an external device such as a smart phone or smart watch connected/paired to the optical device 202 to gather voice data for command recognition), and the like. In some implementations, input device 218 can be an externally connected input device (e.g., a smart computing device, a connected keyboard, etc.). In some implementations, desired functionality may need to be entered using more than one input device 218.

Speaker 220 provides audio output functionality. In some implementations, the speaker 220 can include externally connected (e.g., using external connector 210) speakers 220 to provide better audio input/output resolution.

Display 222 (e.g., a liquid crystal display (LCD), an organic light emitting diode (OLED) display, or other type of display) is used to provide both visual indications and data (e.g., screenshot 100) to an observer and, in some implementations, to accept user input (e.g., using a touch-sensitive display). For example, the display 222 can display a visual image, provide a GUI, display processed data in graphical form (e.g., in charts/graphs), and the like.

Generally, the processor 224 executes instructions and manipulates data to perform the operations (including those described above) performed by the optical device 202. Specifically, the processor 224 can execute the functionality for creating, operating, and/or managing an optical device 202 and/or system 200 (or any element of the system 200) and/or performing any functionality associated with the system 200 and within the scope of this disclosure. Although illustrated as a single processor 224 in FIG. 2, two or more processors 224 may be used according to particular needs, desires, or particular implementations of the optical device 202 and/or the system 200. In some implementations, the processor can be configured as a system-on-a-chip (SoC), system-in-parts (SiP), or other configuration (e.g., including a memory controller, processor, graphics processor, memory, memory interface, network interface, and the like in a single or tightly integrated package). In these implementations, various described elements of the optical device 202 can be incorporated into and performed by the processor 224.

Power supply 226 can include AC/DC, battery, rechargeable battery, and/or other power sources used to operate the optical device 202. Power supply 226 is typically interfaced with at least one form of power switch (not illustrated) to turn the device ON/OFF (e.g., button, toggle, touch-sensitive, voice control, etc.). In some implementations, the optical device 202 provides functionality to analyze and inform a user of the charge/recharge status of batteries. In some configurations, rechargeable batteries can either be user- or non-user-replaceable.

In some implementations, the optical device 202 can be configured to permit modular addition/removal of components from the optical device 202. For example, an optical device 202 can be configured with standard components (e.g., memory 214, application 212, input device 218, processor 224, etc.), but other elements of the optical device 202 can be modularly added and removed from the optical device 202 (e.g., sensors 216 such as visual or audio sensors can be replaced for better resolution/different spectrum images or directional audio gathering, a stereo speaker 220 for better audio output resolution, an enhanced power supply 226, etc.).

In some implementations, elements of optical device 202 (and similar other elements of system 200) can be updated using various methods. For example, in some implementations, updated firmware, application, and/or reticle data can be introduced to optical device 202 through the external connector 210, network interface 208, and/or memory 214. In these implementations, data can be transferred using a USB memory device, data cable (USB, FIREWIRE, etc.), network cable (e.g., ETHERNET, etc.), and/or other transfer method consistent with this disclosure. In some implementations, the optical device 210 can be updated using a wireless-type connection (e.g., WIFI, BLUETOOTH, cellular, etc.).

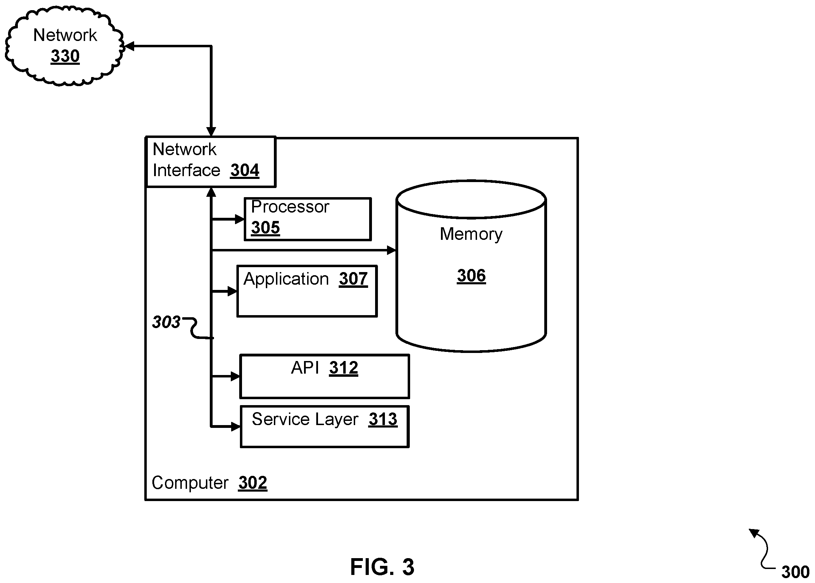

FIG. 3 is a block diagram 300 of an exemplary computer used in the provision of enhanced situational awareness using magnified PIP within a wide FOV optical image, according to an implementation. The illustrated computer 302 is intended to encompass any computing device integrated with and/or coupled to an optical device as described in this disclosure - such as a server, desktop computer, laptop/notebook computer, wireless data port, smart phone, personal data assistant (PDA), tablet computing device, wearable computer, smart watch, television, one or more processors within these devices, or any other suitable processing device, including both physical and/or virtual instances of the computing device. Additionally, the computer 302 may include an input device, such as a keypad, keyboard, touch screen, multifunction button(s), and/or other device that can accept user information, and an output device that conveys information associated with the operation of the computer 302, including digital data, visual and/or audio information, or a GUI.

While the computer 302 typically serves as part of and/or in conjunction with an optical device 202 and/or external device 204, in some implementations, the computer 302 can also serve as a client, network component, a server, a database or other persistency, and/or any other component (whether or not illustrated) of the system 200. The illustrated computer 302 is communicably coupled with a network 330 (e.g., network 206 of FIG. 2). In some implementations, one or more components of the computer 302 may be configured to operate within a cloud-computing-based environment.

At a high level, the computer 302 is an electronic computing device operable to receive, transmit, process, store, or manage data and information associated with the system 200. In some implementations, the computer 302 may also include or be communicably coupled with an application server, e-mail server, web server, caching server, streaming data server, business intelligence (BI) server, and/or other server.

The computer 302 can receive requests over network 330 from an application (e.g., an application 307 executing on another computer 302 or another application) or other element of system 200 and responding to the received requests by processing the said requests in an application (e.g., application 307). In addition, requests may also be sent to the computer 302 from internal users (e.g., from a command console or by other appropriate access method), external or third parties, other automated applications, as well as any other appropriate entities, individuals, systems, or computers.

Each of the components of the computer 302 can communicate using a system bus 303. In some implementations, any and/or all the components of the computer 302, both hardware and/or software, may interface with each other and/or the network interface 304 over the system bus 303 using an application programming interface (API) 312 and/or a service layer 313. The API 312 may include specifications for routines, data structures, and object classes. The API 312 may be either computer language-dependent/independent and refer to a complete interface, a single function, or even a set of APIs. The service layer 313 provides software services to the computer 302 and/or the system 200. The functionality of the computer 302 may be accessible for all service consumers using this service layer. Software services, such as those provided by the service layer 313, provide reusable, defined business functionalities through a defined interface. For example, the interface may be software written in JAVA, C++, or other suitable language providing data in extensible markup language (XML) format or other suitable format. While illustrated as an integrated component of the computer 302, alternative implementations may illustrate the API 312 and/or the service layer 313 as stand-alone components in relation to other components of the computer 302 and/or system 200. Moreover, any or all parts of the API 312 and/or the service layer 313 may be implemented as child or sub-modules of another software module, application, or hardware module without departing from the scope of this disclosure.

The computer 302 includes a network interface 304 (e.g., network interface 208). Although illustrated as a single network interface 304 in FIG. 3, two or more network interfaces 304 may be used according to particular needs, desires, or particular implementations of the computer 302 and/or system 200. The network interface 304 is used by the computer 302 for communicating with other systems (whether illustrated or not) in a distributed environment - including within the system 200 - connected to the network 330. Generally, the network interface 304 comprises logic encoded in software and/or hardware in a suitable combination and operable to communicate with the network 330. More specifically, the network interface 304 may comprise software supporting one or more communication protocols associated with communications such that the network 330 or interface's hardware is operable to communicate physical signals within and outside of the illustrated system 200.

The computer 302 includes a processor 305 (e.g., processor 224). Although illustrated as a single processor 305 in FIG. 3, two or more processors may be used according to particular needs, desires, or particular implementations of the computer 302 and/or the system 200. Generally, the processor 305 executes instructions and manipulates data to perform the operations of the computer 302. Specifically, the processor 305 can execute the functionality for creating, operating, and/or managing a system 200 (or any element of the system 200) and/or performing any functionality associated with the system 200 and within the scope of this disclosure - particularly providing enhanced situational awareness using magnified PIP within a wide FOV optical image.

The computer 302 also includes a memory 306 (e.g., memory 214) that holds data for the computer 302 and/or other components of the system 200. Although illustrated as a single memory 306 in FIG. 3, two or more memories may be used according to particular needs, desires, or particular implementations of the computer 302 and/or the system 200. While memory 306 is illustrated as an integral component of the computer 302, in alternative implementations, memory 306 can be external to the computer 302 and/or the system 200.

The application 307 (e.g., application 212) is an algorithmic software engine providing functionality according to particular needs, desires, or particular implementations of the computer 302, particularly with respect to functionality required for creating, operating, and/or managing a system 200 (or any element of the system 200) and/or performing any functionality associated with the system 200 and within the scope of this disclosure - particularly providing enhanced situational awareness using magnified PIP within a wide FOV optical image. For example, application 307 can provide functionality for one or more components, modules, applications, etc. described with respect to FIGS. 1, 2, and 4. Further, although illustrated as a single application 307, the application 307 may be implemented as multiple applications 307 on the computer 302. In addition, although illustrated as integral to the computer 302, in alternative implementations, the application 307 can be external to the computer 302 and/or the system 200.

There may be any number of computers 302 associated with, or external to, the system 200 and communicating over network 330. Further, the terms "client," "user," and other appropriate terminology may be used interchangeably as appropriate without departing from the scope of this disclosure. Moreover, this disclosure contemplates that many users may use one computer 302, or that one user may use multiple computers 302.

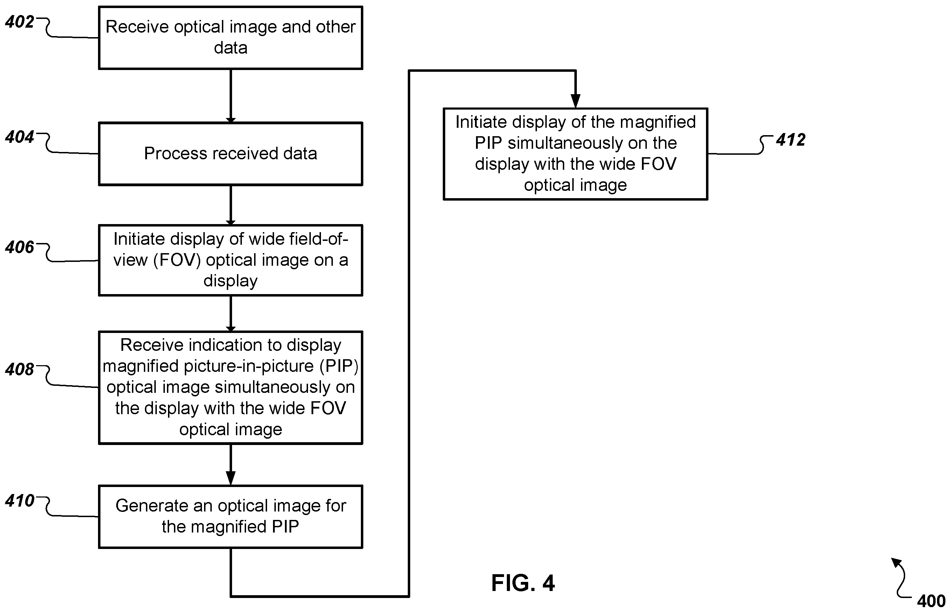

FIG. 4 is a flow chart of a method 400 for providing enhanced situational awareness using magnified PIP within a wide FOV optical image, according to an implementation. For clarity of presentation, the description that follows generally describes method 400 in the context of FIGS. 1-3. However, it will be understood that method 400 may be performed, for example, by any other suitable system, environment, software, and hardware, or a combination of systems, environments, software, and hardware as appropriate. In some implementations, various steps of method 400 can be run in parallel, in combination, in loops, or in any order.

At 402, an optical image and other data (e.g., audio, temperature, elevation, etc.) are received. For example, a firearm scope incorporating the described functionality can receive an optical image and audio data using a visual sensor and an audio sensor. From 402, method 400 proceeds to 404.

At 404, the received optical image and other data are processed. For example, an image processing program (e.g., the application of FIG. 2) executed by the processor can modify, enhance, and prepare received data consistent with the description above for presentation on a display for a user. From 404, method 400 proceeds to 406.

At 406, a display of the wide FOV optical image is displayed on the display. As described above, associated data can be displayed with the wide FOV optical image (e.g., the above-described data bar). From 406, method 400 proceeds to 408.

At 408, an indication is received to display a magnified PIP optical image on the display simultaneously with the wide FOV optical image. For example, the indication can be initiated by a user action such as a voice command, button selection, touch screen selection, dynamic rule, etc. From 408, method 400 proceeds to 410.

At 410, an optical image for the magnified PIP is generated. In typical implementations, a central area around a reticle (e.g., reticle 108a of FIG. 1) is copied from processed image data (404 above) and processed to produce a magnified PIP. According to claim 1, a central area of a defined size (whether pre- or user-determined) of the wide FOV optical image around a reticle (whether displayed or not with the wide FOV optical image) is copied and processed for display as a magnified PIP. In typical implementations, the magnified PIP can display a generated larger pixel but lower pixel count detailed image (providing an apparent increase in magnification of the optical image displayed in the magnified PIP) and to reflect an aligned/correlated reduced size reticle (e.g., reticle 108b of FIG. 1) to distinguish it from the reticle associated with the wide FOV optical image and to not obscure the optical image displayed in the magnified PIP. From 410, method 400 proceeds to 412.

At 412, the simultaneous display of the generated magnified PIP with the wide FOV optical image on the display is initiated. For example, the magnified PIP is displayed/overlaid onto the wide FOV optical image in a particular position (e.g., centered and above the center point of the wide FOV optical image). The magnified PIP optical image and associated reticle can be used in conjunction with the wide FOV optical image and associated reticle to provide situational awareness and/or other above-described advantages. After 412, method 400 stops.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application-specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example, LINUX, UNIX, WINDOWS, MAC OS, ANDROID, IOS, or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a read-only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer-readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically erasable programmable read-only memory (EEPROM), and flash memory devices; magnetic disks, e.g., internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), LED (Light Emitting Diode), or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface including, but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language-independent or -dependent and refer to a complete interface, a single function, or even a set of APIs. The service layer provides software services to the computing system. The functionality of the various components of the computing system may be accessible for all service consumers using this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination.

Particular implementations of the subject matter have been described.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Accordingly, the above description of example implementations does not define or constrain this disclosure. Rather, the scope of protection is defined by the claims.

## Claims

1. A method for providing enhanced situational awareness using a magnified picture-in-picture (104) within a wide field-of-view optical image (102) from a firearm scope, the method comprising:
processing (404) a received optical image to generate the wide field-of-view optical image;
initiating (406) display of the wide field-of-view optical image on a display of the firearm scope;
receiving (408) an indication to display a magnified picture-in-picture image on the display simultaneously with the wide field-of-view optical image;
generating (410) the magnified picture-in-picture image for display on the display of the firearm scope, wherein the magnified picture-in-picture image is copied from a central area of a defined size of the wide field-of-view optical image around a reticle and wherein changing the zoom of either the magnified picture-in-picture image or the wide field-of-view optical image affects the zoom of the other according to some determined dynamic scale or a prior/on-the-fly user selection; and
initiating (412) display of the magnified picture-in-picture image on the display of the firearm scope simultaneously with the wide field-of-view optical image.

2. The method of claim 1, comprising receiving audio or other data associated with the optical image.

3. The method of claim 2, wherein the other data includes data received from temperature, altitude, humidity, atmospheric pressure, elevation, gyroscopic, accelerometer, light intensity, or compass sensors.

4. The method of claim 1, wherein processing includes formatting, sizing, scaling, color determination, temperature determination, contrast determination, and brightness determination.

5. The method of claim 1, wherein the magnified picture-in-picture image displays a lower pixel detailed image than the wide field-of-view optical image.

6. The method of claim 1, wherein the magnified picture-in-picture image displays a reticle reduced in size from a reticle displayed on the wide field-of-view optical image.

7. The method of claim 1, comprising correlating the magnified picture-in-picture image with the wide field-of-view optical image to provide situational awareness in relation to the wide field-of-view optical image.

8. The method of claim 1, wherein the magnified picture-in-picture image is displayed centered and above the center point of the wide field-of-view optical image.

9. A non-transitory, computer-readable medium storing computer-readable instructions, the instructions executable by a computer and configured to perform the method of any one of claims 1 to 8.

10. A firearm scope, comprising:
a computer memory;
at least one hardware processor interoperably coupled with the computer memory and configured to perform the method of any one of claims 1 to 8.

## Patentansprüche

1. Verfahren zum Bereitstellen eines erweiterten Situationsbewusstseins mithilfe eines vergrößerten Bildes-im-Bild (104) innerhalb eines optischen Bildes mit großem Sichtfeld (102) von einem Waffenzielfernrohr, wobei das Verfahren umfasst:
Verarbeiten (404) eines empfangenen optischen Bildes, um das optische Bild mit großem Sichtfeld zu erzeugen;
Initiieren (406) einer Anzeige des optischen Bildes mit großem Sichtfeld in einer Anzeige des Waffenzielfernrohrs;
Empfangen (408) einer Anweisung zum gleichzeitigen Anzeigen einer vergrößerten Bild-im-Bild-Darstellung und des optischen Bildes mit großem Sichtfeld;
Erzeugen (410) der vergrößerten Bild-im-Bild-Darstellung zum Anzeigen in der Anzeige des Waffenzielfernrohrs, wobei die vergrößerte Bild-im-Bild-Darstellung von einem zentralen Bereich mit einer definierten Größe des optischen Bildes mit großem Sichtfeld um ein Absehen kopiert wird und wobei ein Verändern des Zooms entweder der vergrößerten Bild-im-Bild-Darstellung oder des optischen Bildes mit großem Sichtfeld sich auf den Zoom des anderen gemäß einer bestimmten dynamischen Skala oder einer zuvor getroffenen oder spontanen Benutzerauswahl auswirkt; und
Initiieren (412) des gleichzeitigen Anzeigens der vergrößerten Bild-im-Bild-Darstellung und des optischen Bildes mit großem Sichtfeld in der Anzeige des Waffenzielfernrohrs.

2. Verfahren nach Anspruch 1, das ein Empfangen von akustischen oder anderen Daten umfasst, die dem optischen Bild zugeordnet sind.

3. Verfahren nach Anspruch 2, wobei die anderen Daten Daten beinhalten, die von einem Temperatursensor, einem Höhensensor, einem Feuchtigkeitssensor, einem Luftdrucksensor, einem Erhebungssensor, einem Gyroskop, einem Beschleunigungsmesser, einem Helligkeitssensor oder einem Kompasssensor empfangen werden.

4. Verfahren nach Anspruch 1, wobei das Verarbeiten ein Formatieren, ein Dimensionieren, ein Skalieren, eine Farbbestimmung, eine Temperaturbestimmung, eine Kontrastbestimmung und eine Helligkeitsbestimmung beinhaltet.

5. Verfahren nach Anspruch 1, wobei die vergrößerte Bild-im-Bild-Darstellung ein Bild mit einer geringeren Pixelauflösung als das optische Bild mit großem Sichtfeld anzeigt.

6. Verfahren nach Anspruch 1, wobei die vergrößerte Bild-im-Bild-Darstellung ein Absehen mit einer geringeren Größe als das Absehen anzeigt, das in dem optischen Bild mit großem Sichtfeld angezeigt wird.

7. Verfahren nach Anspruch 1, das ein Korrelieren der vergrößerten Bild-im-Bild-Darstellung mit dem optischen Bild mit großem Sichtfeld umfasst, um ein Situationsbewusstsein in Bezug auf das optische Bild mit großem Sichtfeld bereitzustellen.

8. Verfahren nach Anspruch 1, wobei die vergrößerte Bild-im-Bild-Darstellung zentriert und über dem Mittelpunkt des optischen Bildes mit großem Sichtfeld angezeigt wird.

9. Nicht-flüchtiges computerlesbares Medium, in dem computerlesbare Befehle gespeichert sind, wobei die Befehle durch einen Computer ausführbar sind und konfiguriert sind, um das Verfahren nach einem der Ansprüche 1 bis 8 auszuführen.

10. Waffenzielfernrohr, umfassend:
einen Computerspeicher,
mindestens einen Hardwareprozessor, der wechselseitig funktionsfähig mit dem Computerspeicher verbunden ist und konfiguriert ist, um das Verfahren nach einem der Ansprüche 1 bis 8 auszuführen.

## Revendications

1. Procédé pour fournir une connaissance de la situation améliorée en utilisant une image dans l'image agrandie (104) dans une image optique à large champ de vision (102) à partir d'une lunette de visée d'arme à feu, le procédé comprenant de :
traiter (404) une image optique reçue pour générer l'image optique à large champ de vision ;
procéder (406) à l'affichage de l'image optique à large champ de vision sur un écran de la lunette de visée d'arme à feu ;
recevoir (408) une indication pour afficher une image dans l'image agrandie sur l'écran simultanément avec l'image optique à large champ de vision ;
générer (410) l'image de l'image dans l'image agrandie pour l'affichage sur l'écran de la lunette de visée d'arme à feu, dans lequel l'image de l'image dans l'image agrandie est copiée à partir d'une zone centrale d'une taille définie de l'image optique à large champ de vision autour d'un réticule et dans lequel le changement du zoom de l'une de l'image de l'image dans l'image agrandie ou de l'image optique à large champ de vision affecte le zoom de l'autre en fonction d'une certaine échelle dynamique déterminée ou d'une sélection préalable/à la volée de l'utilisateur ; et
procéder (412) à l'affichage de l'image de l'image dans l'image agrandie sur l'écran de la lunette de visée d'arme à feu simultanément avec l'image optique à large champ de vision.

2. Procédé selon la revendication 1, comprenant de recevoir des données audio ou autres associées à l'image optique.

3. Procédé selon la revendication 2, dans lequel les autres données comprennent des données reçues à partir de capteurs de température, d'altitude, d'humidité, de pression atmosphérique, d'élévation, gyroscopique, accélérométrique, d'intensité lumineuse ou de boussole.

4. Procédé selon la revendication 1, dans lequel le traitement comprend le formatage, le dimensionnement, la mise à l'échelle, la détermination de la couleur, la détermination de la température, la détermination du contraste, et la détermination de la luminosité.

5. Procédé selon la revendication 1, dans lequel l'image de l'image dans l'image agrandie affiche une image détaillée à pixels plus petits que l'image optique à large champ de vision.

6. Procédé selon la revendication 1, dans lequel l'image de l'image dans l'image agrandie affiche un réticule de taille réduite par rapport à un réticule affiché sur l'image optique à large champ de vision.

7. Procédé selon la revendication 1, comprenant mettre en corrélation l'image de l'image dans l'image agrandie avec l'image optique à large champ de vision pour fournir une connaissance de la situation en relation avec l'image optique à large champ de vision.

8. Procédé selon la revendication 1, dans lequel l'image de l'image dans l'image agrandie est affichée centrée et au-dessus du point central de l'image optique à large champ de vision.

9. Support non transitoire lisible par ordinateur stockant des instructions lisibles par ordinateur, les instructions étant exécutables par un ordinateur et configurées pour exécuter le procédé de l'une quelconque des revendications 1 à 8.

10. Lunette de visée pour arme à feu, comprenant :
une mémoire d'ordinateur ;
au moins un processeur matériel couplé de manière interopérable à la mémoire d'ordinateur et configuré pour exécuter le procédé de l'une quelconque des revendications 1 à 8.
